# EUROPEAN PATENT SPECIFICATION

(11) **EP 0 531 035 B1**
(45) Date of publication and mention of the grant of the patent: **22.10.1997**
(21) Application number: 92307745.7
(22) Date of filing: 25.08.1992
(51) Int. Cl.: G11B 5/64

(54) **Magnetic recording medium**
Magnetisches Aufzeichnungsmedium
Milieu d'enregistrement magnétique

(30) Priority: 06.09.1991 JP 254179/91
(43) Date of publication of application: 10.03.1993
(73) Proprietor: International Business Machines Corporation, Armonk, N.Y. 10504 (US)
(72) Inventor: Shimizu, Teruhisa, Den Heishts 302, Yokohama-shi, Kanagawa-ken (JP); Takayama, Shinji, Mitaka-shi, Tokyo (JP)
(74) Representative: Burt, Roger James, Dr.

(56) References cited:
- EP-A- 0 415 431
- US-A- 4 973 525
- PATENT ABSTRACTS OF JAPAN vol. 15, no. 071 (P-1168)19 February 1991

## Description

This invention relates to a magnetic recording medium comprising a substrate with a magnetic layer formed thereon, for use in a magnetic recording tape, disk, or the like.

Metal film media called continuous media that use a ferromagnetic material such as a Co-based magnetic alloy have recently been used as magnetic recording media. However, such magnetic materials as are currently used, if formed into a thin film, do not inherently possess strong in-plane magnetic anisotropy suitable for longitudinal recording. Therefore, a non-magnetic underlayer is provided on a non-magnetic substrate, and a magnetic layer is provided on the underlayer, so as to obtain in-plane magnetic anisotropy. In these magnetic media, however, the characteristics of the magnetic layer vary with the film configuration and the status of non-magnetic underlayer. Therefore, the magnetic layer must be fabricated as carefully as the underlayer, which complicates the control of the process for fabricating the underlayer film.

EP-A-415,431 discloses a magnetic recording medium having a thin film composition of COPtMₐM_{b}O, where M is selected from a large group of elements (Ti, Sr, V, Cr, Nb ...), such a medium having a large in-plane coercive force and a high saturation flux density. US 4,973,525 discloses a magnetic recording medium formed from a ferromagnetic metal ceramic composite (cermet), for example a composite of Fe and SiO₂, which has a high magnetization and a high coercivity. In order for the desired magnetic properties to be obtained, it is critical that the metal volume fraction in the cermet is below a so-called percolation threshold of about 0.6. US 5094897 (cf JP-A-2292717) discloses a thin film magnetic layer predominantly composed of γ-Fe₂O₃, plus optionally α-Fe₂O₃.

It is also known that exchange coupling between magnetized fine grains increases the magnetization transitional width and causes medium noise. In order to increase the recording density, it is important to suppress medium noise. JA PUPA 1-232516 and JA PUPA 1-232517 disclose techniques for reducing medium noise wherein a new alloy of quaternary or higher degree is prepared by adding an element or elements (C, P, Bi, and so forth) to a Co-based magnetic ternary alloy, and a film of the obtained alloy is fabricated on a substrate. However, because coupling between magnetic alloy grains remains in the magnetic layer, medium noise is not suppressed sufficiently. Further, the coercivity obtained may be less than 1000 (Oe). In addition, a Cr underlayer is still required.

Accordingly, the invention provides a magnetic recording medium comprising a substrate and a magnetic layer formed thereupon, the magnetic recording layer not being essentially composed of γ-Fe₂O₃ and α-Fe₂O₃, but comprising a mixture of a magnetic material and a non-magnetic compound, said magnetic material being Co-based, Fe-based, or FeCo-based and said non-magnetic compound being an oxide or a nitride,
and said medium being characterised in that the volume percentage of said non-magnetic compound in said mixture is between 2% and 30%.

Such a magnetic recording medium is suitable for longitudinal recording, with low medium noise and high coercivity, for example in magnetic disks for computer disk drives, or in magnetic tapes. The magnetic recording medium using a Co-based, Fe-based, or FeCo-based magnetic alloy for its magnetic layer together with a non-magnetic compound selected from a group consisting of oxides and nitrides has magnetic characteristics suitable for longitudinal magnetic recording, without using an underlayer. This medium has a simple structure because an underlayer is not necessary and the manufacturing process is consequently simplified.

In the prior art the magnetic anisotropy of a single film composed of magnetic alloys does not preferentially grow in the in-plane direction. Therefore, a non-magnetic underlayer has hitherto been provided in order to obtain in-plane anisotropy of the magnetic layer. However, in a mixture of a non-magnetic compound film and a magnetic material film, the non-magnetic compound, which is not fused into the magnetic material, can exist in the magnetic layer, and thereby incline the magnetic anisotropy direction of the magnetic layer in a direction parallel to the medium surface without an underlayer. This inclination is assumed to be caused by a non-magnetic compound changing the crystal growth orientation of the magnetic alloy and inducing an anisotropy suitable for in-plane magnetic recording. It is also noted that a non-magnetic compound causes high coercivity and reduces medium noise because it isolates and makes magnetic alloy grains finer.

In a preferred embodiment, the magnetic layer is formed directly on the substrate (ie without an underlayer), although an underlayer may be desired to adjust the magnetic characteristics of the magnetic layer. In general, a protective layer will be formed on the magnetic layer.

Examples of suitable Co-based magnetic materials for the magnetic layer are ternary alloys such as CoNiCr, CoNiPt, CoCrPt, and CoCrTa. Examples of suitable non-magnetic compounds for the magnetic layer are silicon oxide, zirconium oxide, tantalum oxide, silicon nitride, boron nitride, titanium nitride, and aluminum nitride.

Overall estimation of the magnetic characteristics, read/write characteristics, and reliability indicates that preferred compositions for Co-based magnetic alloys can be expressed by the following general formulas:

Co_{(1-x-y)}Ni₍ₓ₎Cr_{(y)}

where x = 0.2 to 0.4 and y = 0.05 to 0.1;

Co_{(1-x-y)}Ni₍ₓ₎Pt_{(y)}

where x = 0.2 to 0.4 and y = 0.01 to 0.2;

Co_{(1-x-y)}Cr₍ₓ₎Pt_{(y)}

where x = 0.1 to 0.3 and y = 0.01 to 0.2, and

Co_{(1-x-y)}Cr₍ₓ₎Ta_{(y)}

where x = 0.1 to 0.3 and y =0.01 to 0.05, (see A. Terada: Journal of the Magnetics Society of Japan Vol. 13, No. 3, 493(1989))

The volume percentage of non-magnetic compound in the entire volume of mixed magnetic alloy and non-magnetic compound (hereafter called the mixed volume percentage) is not less than 2% and not more than 30% with the maximum effect being obtained at about 5%.

Even if the Co-based alloy is binary (for example, CoNi, CoPd, CoCr, and CoPt), quaternary (for example, CoNiCrV and CoNiCrCu), or of higher degree, the coupling status among grains in the Co-based alloy film is substantially the same as in the ternary alloy. Therefore, the same effects are expected to be caused by mixing a non-magnetic compound with these alloys. For the same reason, substantially the same effects are expected even when the magnetic material to be mixed with the non-magnetic compound is replaced by an Fe-based alloy (for example, - Fe₂O₃ or FeNi), or an FeCo-based alloy (for example, FeCoCr).

Preferably the magnetic layer is formed by depositing a magnetic material film and a non-magnetic compound film simultaneously, both films being deposited by evaporation and/or sputtering. The important factor in whatever technique is used is the need to obtain the mixture of a magnetic alloy and a non-magnetic compound in a magnetic film.

Thus the invention also provides a method for producing a magnetic recording medium comprising a substrate and a magnetic layer formed thereupon, the magnetic layer comprising a mixture of a magnetic material and a non-magnetic compound, said magnetic material being Co-based, Fe-based, or FeCo-based and said non-magnetic compound being an oxide or a nitride, wherein the volume percentage of said non-magnetic compound in said mixture is between 2% and 30%, said method comprising the steps of:
providing a substrate; and
forming a magnetic layer consisting of said mixture of a magnetic material and a non-magnetic compound by depositing both simultaneously onto said substrate, the deposition process being performed by evaporation and/or sputtering.

An embodiment of the invention will now be described by way of example with reference to the following drawings:

Fig. 1 is a cross-sectional view of a magnetic recording medium according to the invention.

Fig. 2 is a cross-sectional view of a conventional magnetic recording medium without a non-magnetic underlayer, which was prepared for the purpose of comparison.

Fig. 3 is a graph showing the relations between the thickness and coercivity of a magnetic recording medium as shown in Figure 1 and of a conventional magnetic recording medium.

Fig. 4 is a graph showing the relations between the mixed volume percentage of the non-magnetic compound and the coercivity of the magnetic recording medium.

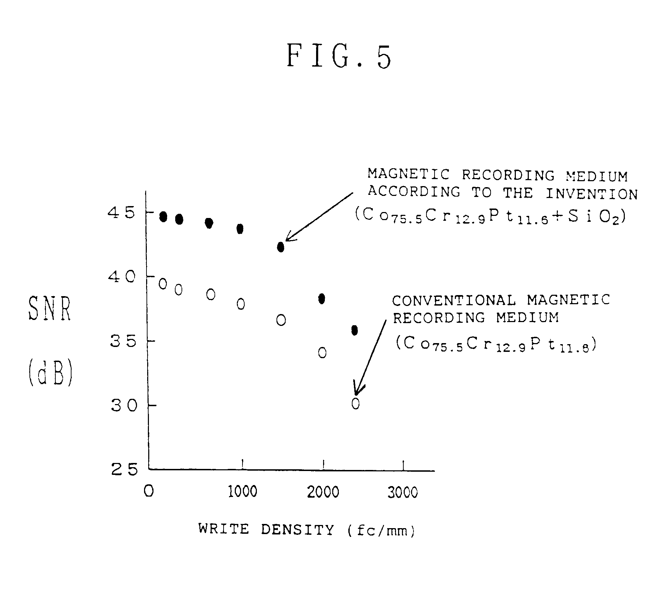

Fig. 5 is a graph showing the recording characteristics (signal-to-noise ratios) of a magnetic recording medium as shown in Figure 1 and of a conventional magnetic recording medium.

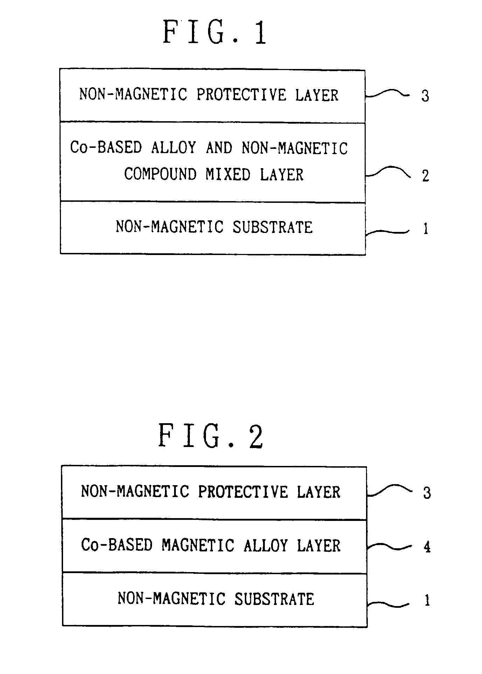

Fig. 1 shows the structure of a magnetic recording medium with a magnetic layer 2 formed on a non-magnetic glass substrate 1. By using DC magnetron sputtering for Co_{75.5}Cr_{12.5}Pt_{11.5} (argon back pressure: 5 mTorr) and RF magnetron sputtering for compound SiO₂, a magnetic alloy film and a non-magnetic film are fabricated at the same time. The mixed volume percentage of SiO₂ is set at 5%. On the magnetic layer 2 a ZrO₂ film (30 nm thick) was formed as a non-magnetic protective layer 3 by RF sputtering. Further, a medium using SiN instead of SiO₂ and a medium using ZrO₂ were prepared in the same conditions (composition of magnetic alloy, mixed-volume percentage, and so on) as for SiO₂. In addition, for comparison purposes, a medium having a Co-based magnetic alloy layer 4 was prepared by forming a film consisting of Co₇₀Cr₁₄Pt₁₆ on a non-magnetic glass substrate 1, the other conditions being identical with those in the foregoing cases (Fig. 2).

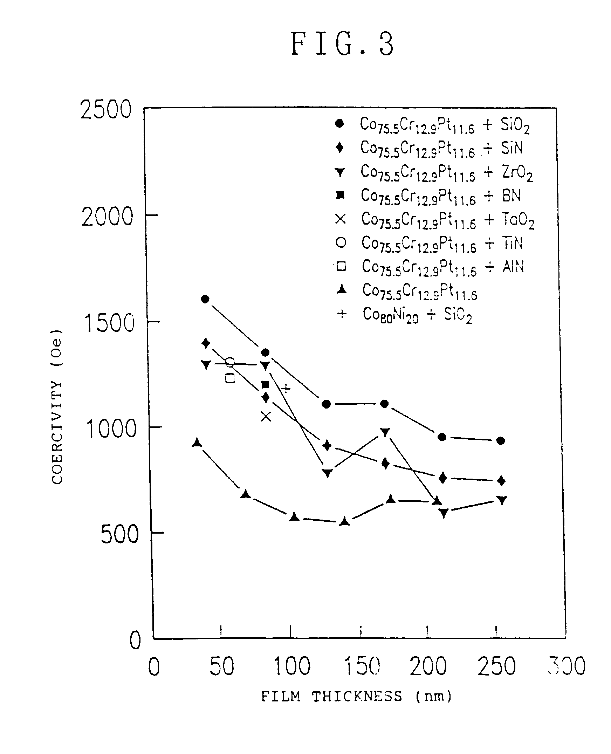

Fig. 3 shows the results obtained when the coercivity was measured by varying the thickness of the magnetic layer 2 or 4. It can be understood from the figure that the magnetic characteristics are significantly improved throughout the entire thickness range by admixture of a non-magnetic compound. In particular, the improvement is remarkable in the thinner range. In Fig. 3, the values of coercivity measured for a medium using BN (instead of) SiO₂, a medium using TaO₂, a medium using TiN, and a medium using AlN are also shown, although with only one point for each medium. The conditions for preparing these media (composition of magnetic alloy, mixed volume percentage, and so on) were the same as for the medium using SiO₂. In addition, a medium was prepared by using the binary alloy Co₈₀Ni₂₀ as a magnetic alloy and SiO₂ as a non-magnetic compound. DC magnetron sputtering was performed for a film of the former and RF sputtering for the latter. The other conditions (mixed volume percentage, etc.) were the same as for SiO₂. Fig. 3 also shows the result of measuring the coercivity for this medium, although with only one point.

Next, the magnitudes of the torque in the in-plane direction were measured for the sample whose magnetic layer is a mixed film of Co_{75.5}Cr_{12.9}Pt_{11.6} and SiO₂ (mixed volume percentage: 5 vol%) and the sample whose magnetic layer consists of Co_{75.5}Cr_{12.9}Pt_{11.6} alone. The thickness of the magnetic layer was 85 nm for both samples. The results of the measurement are shown in Table 1. It can be understood from the table that admixture of SiO₂ gives a greater in-plane anisotropy.

**TABLE 1**

| Sample | Torque(x 10⁵ dyne-cm) |
|---|---|
| Co_{75.5}Cr_{12.9}Pt_{11.6} + SiO2 | 9.75 |
| Co_{75.5}Cr_{12.9}Pt_{11.6} | 4.52 |

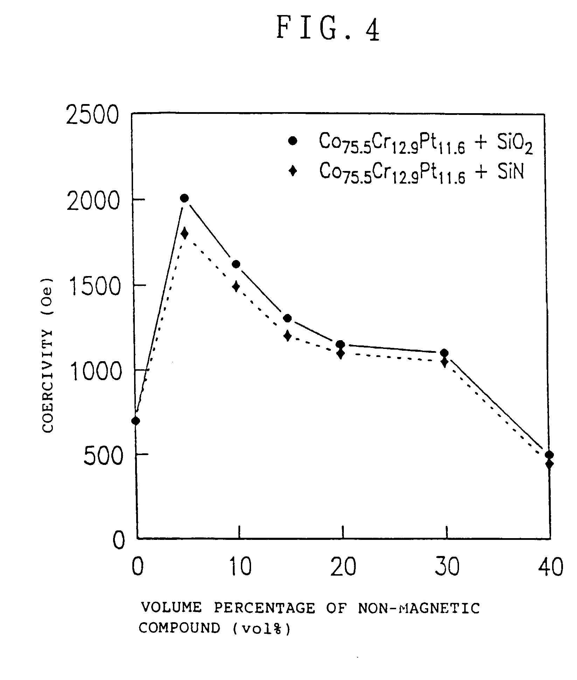

Next, in order to find the relation between the mixed volume percentage of the non-magnetic compound and the coercivity of the medium, an experiment was performed on media having the structure shown in Fig. 1, with the substrate 1 being a glass substrate, the magnetic layer 2 being 43 nm thick, and the protective layer 3 being a 30-nm-thick ZrO₂ film. The result is shown in Fig. 4. In the figure, black circles indicate data obtained from a medium in which the non-magnetic compound in the magnetic layer 2 is SiO₂, while black diamond shapes indicate data obtained from a medium whose non-magnetic compound is SiN. It can be understood from the figure that excellent characteristics are obtained when the mixed volume percentage of the non-magnetic compound is not less than about 2% and not more than about 30%. In particular, when the mixed volume percentage is about 5 vol%, a coercivity of as much as about 2000 (Oe) is obtained.

Finally, an experiment was performed on each sample (disk) shown in Table 1 to find the relation between write density and medium noise. The rotational speed of the disk was 3600 rpm, the recording current was 100 mAp-p, and a thin film head was used as a recording head. The recording characteristic (signal-to-noise ratio) was measured by varying the number of flux changes per millimeter. It can be understood from the figure that the sample including a non-magnetic compound shows an excellent S/N characteristic.

As explained above, disk with appropriate mixtures of magnetic and non-magnetic compunds have excellent magnetic characteristics suitable for longitudinal recording without an underlayer. However, such an underlayer may be interposed between a substrate and a magnetic layer for the purpose of adjusting the magnetic characteristic obtained by mixing a magnetic alloy and a non-magnetic compound in the magnetic layer, and the scope of the invention extends to such media.

Note that the protective layer is not limited to the ZrO₂ film described above, but may be a film of any single material such as amorphous carbon or SiO₂ that is known to be suitable for protection of a magnetic film.

## Claims

1. A magnetic recording medium comprising a substrate (1) and a magnetic layer (2) formed thereupon, the magnetic recording layer not being essentially composed of γ-Fe₂O₃ and α-Fe₂O₃, but comprising a mixture of a magnetic material and a non-magnetic compound, said magnetic material being Co-based, Fe-based, or FeCo-based and said non-magnetic compound being an oxide or a nitride,
and said medium being characterised in that the volume percentage of said non-magnetic compound in said mixture is between 2% and 30%.

2. The magnetic recording medium of claim 1, in which the thickness of the magnetic layer is in the range from 50nm to 250nm.

3. The magnetic recording medium of any preceding claim, wherein said magnetic layer is formed directly on said substrate.

4. The magnetic recording medium of any preceding claim, further comprising a protective layer (3) formed on said magnetic layer.

5. The magnetic recording medium of any preceding claim, wherein said non-magnetic compound contains at least one of silicon oxide, zirconium oxide, tantalum oxide, silicon nitride, boron nitride, titanium nitride, and aluminium nitride.

6. The magnetic recording medium of any preceding claim, wherein said magnetic material is a ternary alloy selected from a group consisting of CoNiCr, CoNiPt, CoPtCr, and CoCrTa.

7. The magnetic recording medium of claim 6, wherein the composition of said Co-based ternary magnetic alloy is expressed by Co_{(1-x-y)}Ni₍ₓ₎Cr_{(y)}, where 0.2<=x<=0.4 and 0.05<=y<=0.1.

8. The magnetic recording medium of claim 6, wherein the composition of said Co based ternary magnetic allow is expressed by Co_{(1-x-y)}Ni₍ₓ₎Pt_{(y)}, where 0.2<=x<=0.4 and 0.01<=y<=0.2.

9. The magnetic recording medium of claim 6, wherein the composition of said Co-based ternary magnetic alloy is expressed by Co_{(1-x-y)}Cr₍ₓ₎Pt_{(y)}, where 0.1<=x<=0.3 and 0.01<=y<=0.2.

10. The magnetic recording medium of claim 6, wherein the composition of said Co-based ternary magnetic alloy is expressed by Co_{(1-x-y)}Cr₍ₓ₎Ta_{(y)}, where 0.1<=x<=0.3 and 0.01<=y<=0.05.

11. The magnetic recording medium of any preceding claim, wherein said magnetic layer is formed by depositing a magnetic material film and a non-magnetic compound film simultaneously, both films being deposited by evaporation and/or sputtering.

12. The magnetic recording medium of any preceding claim, wherein the non-magnetic compound is not fused into the magnetic material.

13. A magnetic recording disk including the magnetic recording medium of any preceding claim.

14. A method for producing a magnetic recording medium comprising a substrate and a magnetic layer formed thereupon, the magnetic layer comprising a mixture of a magnetic material and a non-magnetic compound, said magnetic material being Co-based, Fe-based, or FeCo-based and said non-magnetic compound being an oxide or a nitride, wherein the volume percentage of said non-magnetic compound in said mixture is between 2% and 30%, said method comprising the steps of:
providing a substrate (1); and
forming a magnetic layer (2) consisting of said mixture of a magnetic material and a non-magnetic compound by depositing both simultaneously onto said substrate, the deposition process being performed by evaporation and/or sputtering.

## Patentansprüche

1. Magnetisches Aufzeichnungsmedium mit einem Substrat (1) und einer darauf ausgebildeten magnetischen Schicht (2), wobei die magnetische Aufzeichnungsschicht nicht in der Hauptsache aus γ-Fe₂O₃ und α-Fe₂O₃ besteht, sondern ein Gemisch aus einem magnetischen Material und einer nicht-magnetischen Verbindung beinhaltet, wobei das magnetische Material auf Co basiert, Fe basiert oder FeCo basiert und die nicht-magnetische Verbindung ein Oxid oder ein Nitrid ist,
und wobei das Medium dadurch gekennzeichnet ist, daß der Volumenprozentsatz der nicht-magnetischen Verbindung in dem Gemisch zwischen 2 % und 30 % beträgt.

2. Magnetisches Aufzeichnungsmedium nach Anspruch 1, in dem die Dicke der magnetischen Schicht im Bereich zwischen 50 nm und 250 nm liegt.

3. Magnetisches Aufzeichnungsmedium nach irgendeinem vorhergehenden Anspruch, wobei die magnetische Schicht direkt auf dem Substrat gebildet ist.

4. Magnetisches Aufzeichnungsmedium nach irgendeinem vorhergehenden Anspruch, das des weiteren eine auf der magnetischen Schicht ausgebildete Schutzschicht (3) beinhaltet.

5. Magnetisches Aufzeichnungsmedium nach irgendeinem vorhergehenden Anspruch, wobei die nicht-magnetische Verbindung wenigstens eines von Siliciumoxid, Zirkoniumoxid, Tantaloxid, Siliciumnitrid, Bornitrid, Titannitrid und Aluminiumnitrid enthält.

6. Magnetisches Aufzeichnungsmedium nach irgendeinem vorhergehenden Anspruch, wobei das magnetische Material eine ternäre Legierung ist, die aus einer Gruppe ausgewählt ist, die aus CoNiCr, CoNiPt, CoPtCr und CoCrTa besteht.

7. Magnetisches Aufzeichnungsmedium nach Anspruch 6, wobei die Zusammensetzung der auf Co basierenden ternären magnetischen Legierung durch Co_{(1-x-y)}Ni₍ₓ₎Cr_{(y)} ausgedrückt wird, wobei 0,2 ≤ x ≤ 0,4 und 0,05 ≤ y ≤ 0,1.

8. Magnetisches Aufzeichnungsmedium nach Anspruch 6, wobei die Zusammensetzung der auf Co basierenden ternären magnetischen Legierung durch Co_{(1-x-y)}Ni₍ₓ₎Pt_{(y)} ausgedrückt wird, wobei 0,2 ≤ x ≤ 0,4 und 0,01 ≤ y ≤ 0,2.

9. Magnetisches Aufzeichnungsmedium nach Anspruch 6, wobei die Zusammensetzung der auf Co basierenden ternären magnetischen Legierung durch Co_{(1-x-y)}Cr₍ₓ₎Pt_{(y)} ausgedrückt wird, wobei 0,1 ≤ x ≤ 0,3 und 0,01 ≤ y ≤ 0,2.

10. Magnetisches Aufzeichnungsmedium nach Anspruch 6, wobei die Zusammensetzung der auf Co basierenden ternären magnetischen Legierung durch Co_{(1-x-y)}Cr₍ₓ₎Ta_{(y)} ausgedrückt wird, wobei 0,1 ≤ x ≤ 0,3 und 0,01 ≤ y ≤ 0,05.

11. Magnetisches Aufzeichnungsmedium nach irgendeinem vorhergehenden Anspruch, wobei die magnetische Schicht durch gleichzeitiges Aufbringen eines Films aus magnetischem Material und eines Films aus einer nicht-magnetischen Verbindung gebildet ist, wobei beide Filme durch Aufdampfen und/ oder Sputtern abgeschieden sind.

12. Magnetisches Aufzeichnungsmedium nach irgendeinem vorhergehenden Anspruch, wobei die nicht-magnetische Verbindung nicht in das magnetische Material hineingeschmolzen ist.

13. Magnetische Aufzeichnungsplatte, die das magnetische Aufzeichnungsmedium nach irgendeinem vorhergehenden Anspruch beinhaltet.

14. Verfahren zum Erzeugen eines magnetischen Aufzeichnungsmediums mit einem Substrat und einer darauf ausgebildeten magnetischen Schicht, wobei die magnetische Schicht ein Gemisch aus einem magnetischen Material und einer nicht-magnetischen Verbindung beinhaltet, wobei das magnetische Material auf Co basiert, Fe basiert oder FeCo basiert und die nicht-magnetische Verbindung ein Oxid oder ein Nitrid ist, wobei der Volumenprozentsatz der nicht-magnetischen Verbindung in dem Gemisch zwischen 2 % und 30 % beträgt, wobei das Verfahren die Schritte umfaßt:
Bereitstellen eines Substrates (1); und
Bilden einer magnetischen Schicht (2), die aus dem Gemisch aus einem magnetischen Material und einer nicht-magnetischen Verbindung besteht, durch gleichzeitiges Aufbringen beider auf das Substrat, wobei der Depositionsprozeß durch Aufdampfen und/oder Sputtern durchgeführt wird.

## Revendications

1. Support d'enregistrement magnétique comprenant un substrat (1) et une couche magnétique (2) formée sur celui-ci, la couche d'enregistrement magnétique n'étant pas essentiellement composée de γ-Fe₂O₃ et de α-Fe₂O₃ mais comprenant un mélange d'un matériau magnétique et d'un composé non-magnétique, ledit matériau magnétique étant à base de Co, à base de Fe ou à base de FeCo et ledit composé non-magnétique étant un oxyde ou un nitrure,
et ledit support étant caractérisé en ce que le pourcentage en volume dudit composé non-magnétique dans ledit mélange est situé entre 2 % et 30 %.

2. Support d'enregistrement magnétique selon la revendication 1, dans lequel l'épaisseur de la couche magnétique est dans la plage située entre 50 nm à 250 nm.

3. Support d'enregistrement magnétique selon l'une quelconque des revendications précédentes, dans lequel ladite couche magnétique est formée directement sur ledit substrat.

4. Support d'enregistrement magnétique selon l'une quelconque des revendications précédentes, comprenant de plus une couche de protection (3) formée sur ladite couche magnétique.

5. Support d'enregistrement magnétique selon l'une quelconque des revendications précédentes, dans lequel ledit composé non-magnétique contient au moins un élément parmi l'oxyde de silicium, l'oxyde de zirconium, l'oxyde de tantale, le nitrure de silicium, le nitrure de bore, le nitrure de titane et le nitrure d'aluminium.

6. Support d'enregistrement magnétique selon l'une quelconque des revendications précédentes, dans lequel ledit matériau magnétique est un alliage ternaire sélectionné dans un groupe qui est constitué de CoNiCr, CoNiPt, CoPtCr et CoCrTa.

7. Support d'enregistrement magnétique selon la revendication 6, dans lequel la composition dudit alliage magnétique ternaire à base de Co est exprimée par Co_{(1-x-y)}Ni₍ₓ₎Cr_{(y)}, où 0,2<=x<=0,4 et 0,05<=y<=0,1.

8. Support d'enregistrement magnétique selon la revendication 6, dans lequel la composition de l'alliage magnétique ternaire à base de Co est exprimée par Co_{(1-x-y)}Ni₍ₓ₎Pt_{(y)}, où 0,2<=x<=0,4 et 0,01<=y<=0,2.

9. Support d'enregistrement magnétique selon la revendication 6, dans lequel la composition dudit alliage magnétique ternaire à base de Co est exprimée par Co_{(1-x-y)}Cr₍ₓ₎Pt_{(y)}, où 0,1<=x<=0,3 et 0,01<=y<=0,2.

10. Support d'enregistrement magnétique selon la revendication 6, dans lequel la composition dudit alliage magnétique ternaire à base de Co est exprimée par Co_{(1-x-y)}Cr₍ₓ₎Ta_{(y)}, où 0,1<=x<=0,3 et 0,01<=y<=0,05.

11. Support d'enregistrement magnétique selon l'une quelconque des revendications précédentes, dans lequel ladite couche magnétique est formée par le dépôt d'un film d'un matériau magnétique et d'un film de composé non-magnétique simultanément, les deux films étant déposés par évaporation et/ou pulvérisation.

12. Support d'enregistrement magnétique selon l'une quelconque des revendications précédentes, dans lequel le composé non-magnétique n'est pas fondu dans le matériau magnétique.

13. Disque d'enregistrement magnétique comprenant le support d'enregistrement magnétique selon l'une quelconque des revendications précédentes.

14. Procédé pour produire un support d'enregistrement magnétique comprenant un substrat et une couche magnétique formée sur celui-ci, la couche magnétique comprenant un mélange d'un matériau magnétique et d'un composé non-magnétique, ledit matériau magnétique étant à base de Co, à base de Fe ou à base de FeCo et ledit composé non-magnétique étant un oxyde ou un nitrure, dans lequel le pourcentage en volume dudit composé non-magnétique dans ledit mélange est situé entre 2 % et 30 %, ledit procédé comprenant les étapes consistant à :
fournir un substrat (1) ; et
former une couche magnétique (2) qui est constituée dudit mélange d'un matériau magnétique et d'un composé non-magnétique en déposant les deux simultanément sur ledit substrat, le processus de dépôt étant effectué par évaporation et/ou pulvérisation.
